# EUROPÄISCHE PATENTSCHRIFT

(11) **EP 3 866 655 B1**
(45) Veröffentlichungstag und Bekanntmachung des Hinweises auf die Patenterteilung: **17.05.2023**
(21) Anmeldenummer: 19791188.6
(22) Anmeldetag: 15.10.2019
(51) Int. Cl.: A47K 5/12

(54) **FLUIDSPENDER**
FLUID DISPENSER
DISTRIBUTEUR DE FLUIDE

(30) Priorität: 18.10.2018 DE 102018125905
(43) Veröffentlichungstag der Anmeldung: 25.08.2021
(73) Patentinhaber: ILLE Papier-Service GmbH, 63674 Altenstadt (DE)
(72) Erfinder: GOTTSCHALK, Eric, 63486 Bruchköbel (DE); BILETSKYI, Roman, 63674 Altenstadt (DE)
(74) Vertreter: Stoffregen, Hans-Herbert
(86) Internationale Anmeldenummer: PCT/EP2019/077923
(87) Internationale Veröffentlichungsnummer: WO 2020/078981

(56) Entgegenhaltungen:
- US-A1- 2003 075 565
- US-A1- 2014 367 420
- US-A1- 2016 228 897
- US-B1- 7 597 122
- Anonymous: "Schneckengetriebe - Wikipedia", , 30. September 2019 (2019-09-30), XP055653757, Gefunden im Internet: URL:https://de.wikipedia.org/wiki/Schnecke ngetriebe [gefunden am 2019-12-17]
- Anonymous: "Worm drive - Wikipedia", , 18 February 2010 (2010-02-18), XP055678701, Retrieved from the Internet: URL:https://en.wikipedia.org/wiki/Worm_dri ve [retrieved on 2020-03-23]

## Beschreibung

Die Erfindung bezieht sich auf einen Fluidspender, insbesondere Seifenspender, umfassend ein Fluidreservoir, eine Pumpe, die über ein Koppelelement mit einem elektrischen Motor gekoppelt und zur portionsweisen Ausgabe von Fluid ansteuerbar ist, wobei die Pumpe eingangsseitig mit dem Fluidreservoir und ausgangsseitig mit einem Auslass zur Ausgabe des Fluids verbunden ist, sowie eine Steuereinheit mit einem Steuerelement zur Ansteuerung des Motors, wobei das Koppelelement zumindest während der Ausgabe des Fluids in Wirkverbindung mit zumindest einem Schraubengang eines mittels des Motors antreibbaren Schneckenrades steht, wobei eine Drehung des Schneckenrades eine axiale Verschiebung des Koppelelementes und somit eine Betätigung der Pumpe zur portionsweisen Ausgabe des Fluids bewirkt.

Ein Fluidspender der eingangs genannten Art ist aus der US 2014/367420 A1 bekannt. Dieser umfasst ein Fluidreservoir und eine Pumpe, die über ein Kolbenelement mit einem elektrischen Motor gekoppelt und zur portionsweisen Ausgabe von Fluid ansteuerbar ist. Das Koppelelement ist zunächst während der Ausgabe des Fluids in Wirkverbindung mit zumindest einem Schraubengang eines mittels des Motors antreibbaren Schneckenrads, wobei eine Drehung des Schneckenrads eine axiale Verschiebung des Koppelelementes und somit eine Betätigung der Pumpe zur portionsweisen Ausgabe des Fluids bewirkt. Bei der bekannten Ausführungsform wird ein Kolben verstellt, der einen ein Gewinde aufweisenden Abschnitt aufweist, der mit einem Spindelantrieb wechselwirkt. Der Spindelantrieb kann in einer ersten und einer zweiten Richtung gedreht werden, um den Kolben in den Behälter hinein und aus diesem herauszubewegen. Es handelt sich um einen Schneckenantrieb, der mit dem mehrgängigen Gewinde des Kolbens wechselwirkt.

Die US 2016/0228897 A1 betrifft einen Fluidspender mit einem Behälter, aus dem Flüssigkeit abgegeben werden soll. Dabei wirkt ein Aktor auf den Behälter, um diesen zusammenzudrücken. Zum Verstellen des Aktors kann ein motorangetriebenes Getriebe benutzt werden. Der Antrieb erfolgt über ein mehrgängiges Schneckenrad.

Die US 2003/0075565 A1 betrifft einen Seifenspender, wobei zum Betätigen dieses ein Getriebe benutzt wird, das kämmende Schneckenräder aufweist.

Die US 7,597,122 B1 betrifft einen zum Desinfizieren bestimmten Dispenser, der mittels eines Injektionskopfes befüllt wird. Dabei wird der Injektionskopf mittels einer Schneckenwelle in verschiedene Positionen verfahren.

Die DE 203 20 332 U1 betrifft einen elektronischen Fluidspender zur Abgabe von insbesondere Seife, umfassend ein vorzugsweise austauschbares Fluidreservoir sowie eine vorzugsweise mittels eines berührungslos arbeitenden Sensors ansteuerbare Fördereinrichtung, welche das in dem Fluidreservoir enthaltene Fluid über ein Ventil abgibt. Die Fördereinrichtung ist als elektrisch betriebene Zahnradpumpe ausgebildet, wobei die Zahnradpumpe mittels des Sensors einschaltbar und deren Laufzeit über ein Zeitglied durch Programmierung einer elektronischen Steuereinheit oder durch Vorgabe eines Referenzwertes mittels Einstellelemente stufenlos einstellbar ist.

Die Zahnradpumpe weist eine Vielzahl von Bauteilen auf, die im Laufe der Zeit verschleißen und zu erhöhter Reibung führen, wodurch der Energieverbrauch und die Wartungsanfälligkeit ansteigen kann.

Der WO 03/033398 A1 ist ein Seifenspender zu entnehmen, der eine Pumpe und einen elektrischen Motor zur portionsweisen Abgabe flüssiger Seife umfasst. Die Pumpe wird über ein Koppelelement betätigt, das seinerseits über ein ein Schneckenrad aufweisendes Getriebe axial verstellbar ist.

Entsprechend wird auch bei einem Seifenspender nach der US 5,492,247 A eine Pumpe betätigt, um flüssige Seife portionsweise abzugeben.

Die US 6,209,752 B1 verwendet eine Schlauchpumpenanordnung für einen Seifenspender, die seinerseits über ein Getriebe mit einem Elektromotor verbunden ist.

Bei einem Seifenspender nach der US 9,655,478 B2 wirkt ein Koppelelement auf einen in ein Fluidsreservoir eindringendes zylindrisches Element, um Seife abzugeben.

Davon ausgehend liegt der vorliegenden Erfindung die Aufgabe zugrunde, einen Fluidspender der eingangs genannten Art so weiterzubilden, dass der Energieverbrauch reduziert und die Störanfälligkeit minimiert wird. Auch soll ein konstruktiv einfacher Aufbau gegeben sein.

Die Aufgabe wird erfindungsgemäß im Wesentlichen dadurch gelöst, dass das Schneckenrad einen einzigen Schraubengang aufweist.

Gemäß der Erfindung ist vorgesehen, dass das Koppelelement zumindest während der Ausgabe des Fluids in Wirkverbindung mit dem mittels des Motors antreibbaren einen einzigen Schraubengang zum Betätigen als Koppelelement aufweisenden Schneckenrad steht, wobei eine Drehung des Schneckenrades eine axiale Verschiebung des Koppelelementes und somit eine Betätigung der Pumpe zur portionsweisen Ausgabe des Fluids bewirkt.

Durch das Schneckenrad mit dem einen Schraubengang wird gegenüber dem Stand der Technik der Vorteil erreicht, dass mit wenigen Bauteilen ein reibungs- und wartungsarmer sowie energiesparender Antrieb bereitgestellt wird.

Mit nur einer Drehung des Schneckenrads erfolgt ein vollständiger Hub der Pumpe, wobei der Hub sowohl die Ausgabe des Fluids als auch die anschließende Rückführung des Balgs bzw. des Kolbens der Pumpe in seine Ursprungsposition umfasst.

Der einzige Schraubengang kann einen ersten Schraubengangabschnitt mit einer positiven Steigung zur Kraftbeaufschlagung des Koppelelementes aus einer Ausgangsstellung zur Ausgabe von Fluid aufweisen.

Um eine kontrollierte bzw. geführte Rückführung der Pumpe, d.h. des das Fördern des Fluids bewirkenden Elements in seine Ausgangsstellung zu ermöglichen, ist vorgesehen, dass der erste Schraubengangabschnitt mit positiver Steigung stetig in einen zweiten Schraubengangabschnitt mit negativer Steigung übergeht, gegen den das Koppelelement bei Rückführung der Pumpe in ihre Ausgangsstellung anliegt. Dadurch kann ein abrupter Rückschlag des Balgs oder Kolbens der Pumpe verhindert werden.

Je nach Ausführung der Pumpe kann auch vorgesehen sein, dass der erste Schneckengangabschnitt mit positiver Steigung unstetig mit einer Kante abbricht, wodurch das Koppelelement bei Rückführung der Pumpe nicht in Wirkverbindung mit dem Schraubengang steht.

Des Weiteren ist vorgesehen, dass der erste Schraubengangabschnitt eine geringe Steigung aufweist, um mit geringer Kraft eine Axialbewegung des Koppelelements zu bewirken, und dass der zweite Schraubengangabschnitt eine große Steigung aufweist, um eine beschleunigte Rückführung der Pumpe bzw. des Pumpenteils zu bewirken, mittels dessen das Fluid förderbar ist. Die Umfangserstreckung des Schraubengangabschnitts mit der geringen Steigung kann im Bereich von 180° bis 360° liegen, vorzugsweise 270° oder in etwa 270° betragen. Die Umfangserstreckung des Schraubengangabschnitts mit der großen Steigung kann im Bereich von 0° (abfallende Flanke) bis 180° liegen, vorzugsweise 90° oder in etwa 90° betragen.

Vorzugweise ist das Koppelelement als ein Schieber ausgebildet, der in axialer Richtung entlang einer Längsachse der Pumpe verschiebbar angeordnet ist, wobei von dem Schieber ein Stift ausgeht, der kämmend mit dem einzigen Schraubengang des Schneckenrads zusammenwirkt.

Das Koppelelement bzw. der Stift wirken unmittelbar mit dem einzigen Schraubengang kämmend zusammen.

Um die Reibung zwischen Stift und Schraubengang zusätzlich zu minimieren, kann vorgesehen sein, dass auf dem Stift ein Lager, wie Rollenkugellager, angeordnet ist, welches gegen den Schraubengang des Schneckenrads anliegt und auf diesem abrollt.

Vorzugsweise ist das Koppelelement mit einem Balg oder einem Kolben der Pumpe gekoppelt. Damit das Koppelelement bei Rückführung der Pumpe an dem Schraubengang anliegt, ist vorgesehen, dass das Koppelelement, der Balg und/oder der Kolben der Pumpe federvorgespannt ist.

Das Koppelelement weist bevorzugt einen Geber und/oder einen Sensor auf, mittels dem eine Annäherung des Koppelelementes in seine Ausgangsstellung detektierbar und der Motor aussteuerbar ist. Sobald das Koppelelement nach Aktivierung in die Ausgangsstellung zurückkehrt, wird die Stellung erfasst und der Motor abgeschaltet.

Der Geber, wie z. B. ein Magnet, ist bevorzugt an dem Koppelelement und der Sensor, wie z. B. ein Magnetsensor, ist bevorzugt an einer Gehäusewandung angeordnet.

Die Pumpe kann in Form einer Balgpumpe oder einer Kolbenpumpe ausgebildet sein, die durch Druckbeaufschlagung eines Abschnitts eines Balgs oder eines Kolbens betätigbar ist, wobei zumindest ein Abschnitt des Balgs oder der Kolben mit dem Koppelelement gekoppelt ist, welches in Wirkverbindung mit dem den einzigen Schraubengang aufweisenden mittels des Motors antreibbaren Schneckenrad steht, wobei eine Drehung des Schneckenrads eine axiale Verschiebung des Koppelelementes und somit eine Betätigung der Pumpe zur portionsweisen Ausgabe des Fluids bewirkt.

Zum vollständigen Betätigen der Pumpe ist ein einziger Schraubengang erforderlich, der unmittelbar auf das Koppelelement einwirkt. Zum Ende eines Schraubengangs kann das Koppelelement aus dem Schraubengang ausgekoppelt und ohne Wirkverbindung mit dem Schraubengang zurückgeführt werden. Alternativ kann ein rückführender Schraubengangabschnitt mit bestehender Wirkverbindung zwischen Schraubengang und Koppelelement ausgebildet sein. Das Koppelelement wird bei bleibendem Kontakt mit dem Schraubengang zurückgeführt. Die Rückbewegung wird somit durch die Stellung des Schraubengangs gesteuert.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines den Figuren zu entnehmenden bevorzugten Ausführungsbeispiels.

Es zeigen:
- Fig. 1: eine Vorderansicht eines Fluidspenders,
- Fig. 2: eine Schnittdarstellung des Fluidspenders entlang der Schnittlinie L-L gemäß Fig. 1,
- Fig. 3: eine Schnittdarstellung des Fluidspenders entlang der Schnittline D-D gemäß Fig. 1,
- Fig. 4: eine Schnittdarstellung des Fluidspenders entlang der Schnittlinie M-M gemäß Fig. 3,
- Fig. 5: eine Schnittdarstellung des Fluidspenders entlang der Schnittlinie E-E gemäß Fig. 3,
- Fig. 6: eine perspektivische Darstellung des Fluidspenders, teilweise geschnitten,
- Fig. 7 a): eine perspektivische Darstellung einer Schnecke eines Schneckenantriebs des Fluidspenders,

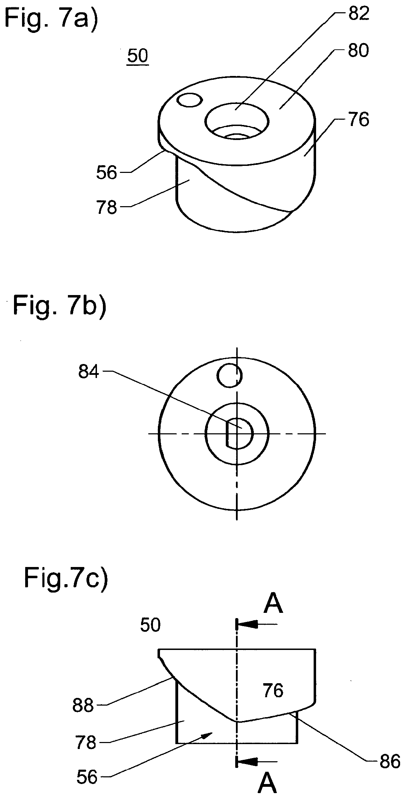

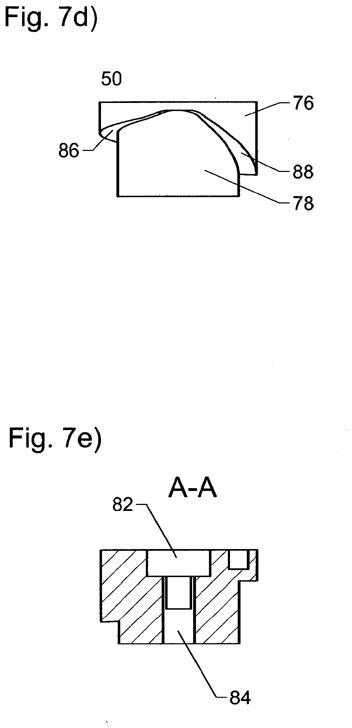

- Fig. 7 b): eine Draufsicht der Schnecke,
- Fig. 7 c): eine Vorderansicht der Schnecke,
- Fig. 7 d): eine Seitenansicht der Schnecke und
- Fig. 7 e): eine Schnittdarstellung der Schnecke entlang der Schnittline A-A gemäß Fig. 7 c).

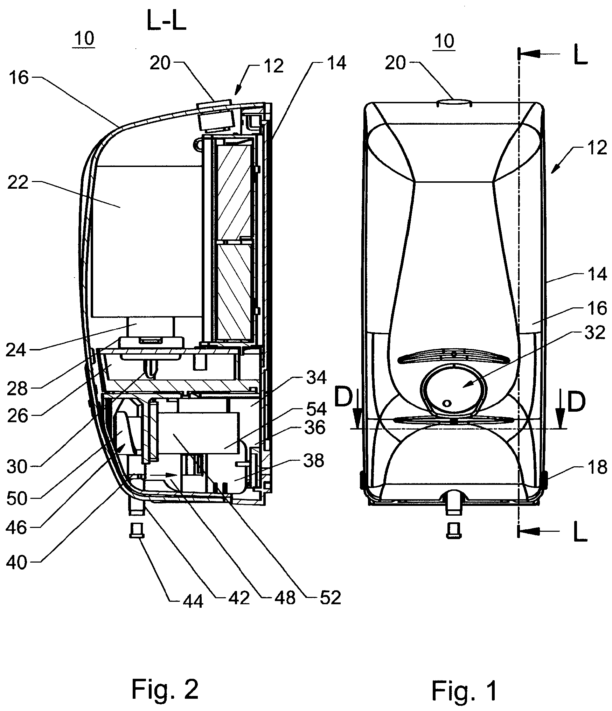

Fig. 1 zeigt eine Vorderansicht eines Fluidspenders 10 in Form eines elektronischen Seifenspenders mit einem Gehäuse 12, umfassend eine Rückwand 14 sowie eine haubenförmige Abdeckung 16, die mittels eines Gelenks 18 schwenkbar mit der Rückwand 14 verbunden ist und in einer geschlossenen Stellung mittels eines Verschlusselementes 20, wie Schloss, verschließbar ist.

In dem Gehäuse 12 ist eine vorzugsweise austauschbare Fluidflasche 22 angeordnet, die mit einer Flaschenöffnung 24 in einem von einem Fluidreservoir, wie Tank 26, ausgehenden Flansch 28 fixiert wie verschraubt oder z. B. schraubenlos durch Drücken bzw. Pressen in den Flansch 28 hinein fixiert ist. In dem Flansch 28 ist ein Axialdom 30 angeordnet, der beim Einbringen, wie Einpressen oder Einschrauben, der Fluidflasche 22 in den Flansch 28 eine Membran (nicht dargestellt) der Flaschenöffnung 24 durchbricht und in geöffneter Stellung hält, so dass Fluid in den Tank 26 einströmen kann. In der Haube 16 ist ein Fenster 32 vorgesehen, durch das z. B. der Füllstand des Fluids in dem Tank 26 beobachtet werden kann.

Der Fluidtank 26 ist über einen Strömungskanal 34 mit einem Einlass 36 einer Pumpe 38 verbunden. Die Pumpe 38 ist im Ausführungsbeispiel in Form einer Balgpumpe aus einem verformbaren Material ausgebildet. Ein Auslass 40 der Pumpe 38 ist mit einem Auslass 42 in Form einer Düse zur Ausgabe des Fluids strömungstechnisch gekoppelt. In dem Auslass 42 kann ein Düseneinsatz 44 angeordnet sein.

Gemäß der Erfindung ist die Pumpe 38 in Form des Balgs aus verformbarem Material mittels eines Schneckenantriebs 46 in Richtung des Pfeils 48 in axialer Richtung verformbar, insbesondere stauchbar, um Fluid aus dem Auslass 42 portionsweise auszugeben. Der Schneckenantrieb 46 umfasst ein Schneckenrad 50, das über ein Getriebe 52 mit einem Antriebsmotor 54 gekoppelt ist.

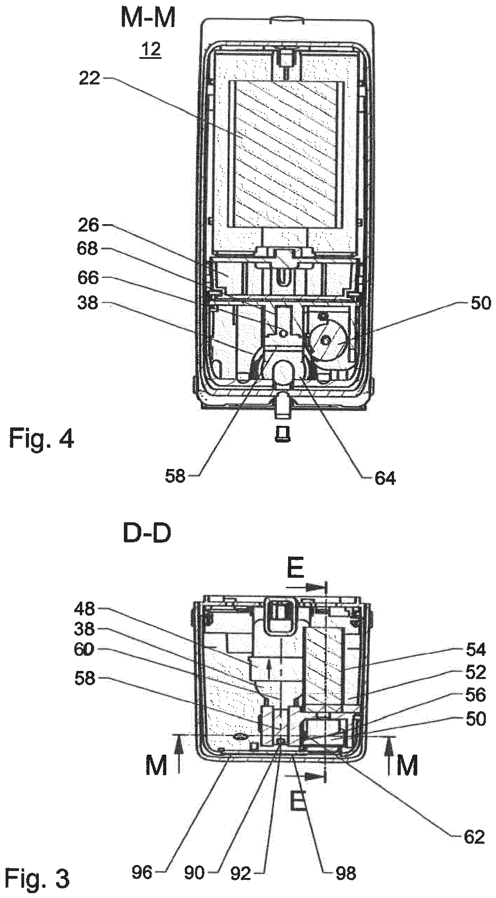

Fig. 3 zeigt eine Schnittdarstellung des Seifenspenders 10 entlang der Schnittline D-D gemäß Fig. 1. Das Schneckenrad 50 weist gemäß der Erfindung einen einzigen Schraubengang 56 auf, der mit einem Koppelelement 58 in Form eines Schiebers kämmend gekoppelt ist. Der Schieber 58 ist entlang einer Längsachse 60 der Pumpe 38 verschiebbar gelagert, wobei durch eine Drehbewegung des Schneckenrads 50 eine Axialbewegung des Schiebers 58 in Richtung des Pfeils 48 bewirkt wird.

Von dem Schieber 58 geht quer zu der Längsachse 60 ein Stift 62 aus, welcher entlang des Schraubengangs 56 mit geringer Reibung geführt wird. Gemäß der Erfindung erfolgt bei einer Umdrehung der Schnecke 50 ein Hub in Richtung des Pfeils 48, d. h. eine Kompression der Pumpe 38 zur Ausgabe des Fluids sowie anschließend eine Rückstellung in eine Ausgangsstellung.

Fig. 4 zeigt eine Schnittdarstellung des Seifenspenders 12 entlang der Schnittlinie M-M gemäß Fig. 3. Der Schieber 58 umfasst pumpenseitig einen gabelförmigen Abschnitt 64, der den Auslass 40 der Pumpe 38 zumindest abschnittsweise umschließt und bei einer Axialbewegung eine Stauchung der Pumpe 38 bewirkt. Ein weiterer Abschnitt 66 des Schiebers 58 ist in einer U-förmigen Aufnahme 68 des Gehäuses in Richtung der Längsachse 60 gelagert.

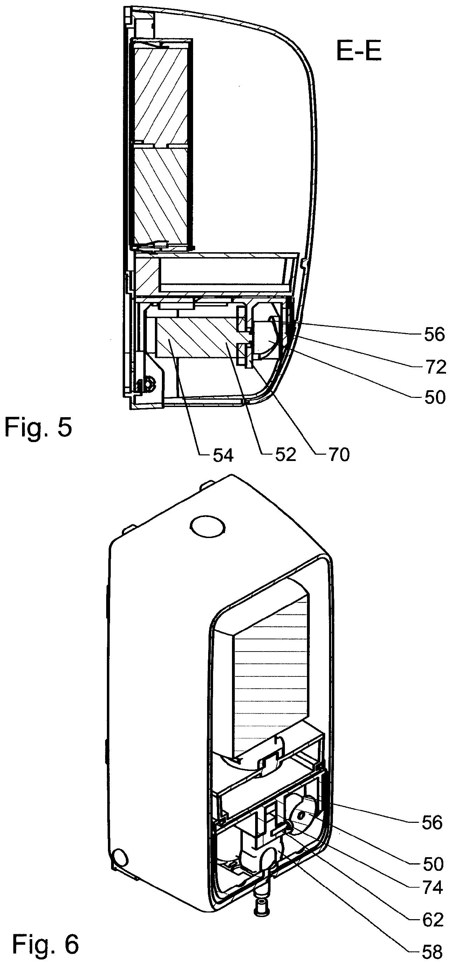

Fig. 5 zeigt eine Schnittdarstellung des Seifenspenders 10 entlang der Schnittlinie E-E gemäß Fig. 3, wobei das Schneckenrad 50 mit dem Getriebe 52 des Motors 54 gekoppelt ist und wobei das Schneckenrad 50 stirnseitig zwischen zwei Gehäuseabschnitten 70, 72 aufgenommen und gelagert ist. Gemäß der Erfindung liegt die Längsachse des Balgs der Pumpe 38 parallel zu einer Drehachse des Schneckenrades 50 mit Getriebe 52 und Motor 54, wodurch ein kompakter Aufbau erreicht wird.

Fig. 6 zeigt in perspektivischer Darstellung, teilweise geschnitten, den von dem Schieber 58 ausgehenden Stift 62, an dem ein Lager, wie Kugelrollenlager 74, gelagert ist, welches mit dem Schraubengang 56 des Schneckenrads 50 zusammenwirkt.

Fig. 7 a) bis 7 e) zeigen das Schneckenrad 50 in verschiedenen Darstellungen.

Fig. 7 a) zeigt das Schneckenrad 50 in perspektivischer Darstellung. Das Schneckenrad 50 umfasst einen zylinderförmigen Körper, in dessen Außenwandung 76 ein Abschnitt 78 freigelegt ist, um den Schraubengang 56 zu bilden. In einer Stirnseite 80 des zylinderförmigen Körpers ist eine Aufnahme 82, wie Sacklochbohrung, ausgebildet, in der ein Lager (nicht dargestellt) zur stirnseitigen Lagerung des Schneckenrads 50 eingebracht werden kann.

Fig. 7 b) zeigt eine Draufsicht des Schneckenrads 50, wobei diese in axialer Richtung eine Durchbrechung 84 zur Aufnahme einer Achse zum Antrieb der Schnecke 50 aufweist.

Die Figuren 7 c) und 7 d) zeigen Seitenansichten des Schneckenrads 50 in verschiedenen Drehpositionen. Der Schraubengang 56 weist in Umfangsrichtung verschiedene Steigungen auf. Ein erster Schraubengangabschnitt 86, der zum Komprimieren der Pumpe 38 ausgebildet ist, weist eine geringe Steigung auf und hat eine Umfangserstreckung von ca. 270°. Ein zweiter Schraubengangabschnitt 88 weist eine größere Steigung auf und dient zum geführten und kontrollierten Rückstellen der Pumpe 38 als Anschlag für den Schieber 58, um ein ruckartiges Expandieren der Pumpe 38 zu vermeiden, was zu Stößen führen würde.

Fig. 7 e) zeigt eine Schnittdarstellung der Schnecke 50 mit Durchbrechung 84 und Aufnahme 82 für ein stirnseitiges Lager.

Zur Überwachung der Position des Schiebers 50 weist dieser stirnseitig einen Geber 90, wie Magneten, auf, der mit einem Sensor 92 zusammenwirkt, der gegenüberliegend von dem Magneten 90 in einer Gehäusewandung 94 angeordnet ist. Der Sensor 92 ist Teil einer Steuereinheit 96, die in Form z. B. einer Platine an der Gehäusewandung 94 im Frontbereich des Gehäuses 12 angeordnet ist. Die Steuereinheit 96 kann auch ein Steuerelement 98, wie kapazitiver Sensor, zur Ansteuerung des Motors bei Annäherung einer Hand umfassen.

Bei Annäherung einer Hand an das Steuerelement 98 in Form eines kapazitiven Sensors wird der Elektromotor 54 angesteuert, so dass das Schneckenrad 50 in Drehbewegung versetzt wird. Durch Drehung des Schneckenrads 50 wird der Schieber 58 in Richtung der Längsachse 62 linear bewegt, wodurch die Pumpe 38 zur portionsweisen Ausgabe des Fluids komprimiert wird. Nach einer Drehung von ca. 270° im Umfangsbereich des Schraubengangabschnitts mit positiver Steigung erfolgt anschließend eine kontrollierte Rückführung des Schiebers 58 mittels des zweiten Schraubengangabschnitts mit negativer Steigung. Durch Annäherung des Gebers 90 des Schiebers 58 an den Sensor 92 wird die Ausgangsstellung erkannt und der Motor 54 abgeschaltet.

Dadurch, dass das Schneckenrad 50 einen einzigen Schraubengang 56 aufweist, durch den die Pumpe 38 betätigt wird, also das Verstellen des Elements zum Fördern des Fluids und Rückführen in die Ausgangsstellung des Elements im Ausführungsbeispiel des Balgs, ergibt sich eine einfache Konstruktion und damit ein geringer Wartungsbedarf. Eine Störanfälligkeit wird minimiert.

## Patentansprüche

1. Fluidspender (10), insbesondere Seifenspender, umfassend ein Fluidreservoir (22), eine Pumpe (38), die über ein Koppelelement (94) mit einem elektrischen Motor (108) gekoppelt und zur portionsweisen Ausgabe von Fluid ansteuerbar ist, wobei die Pumpe eingangsseitig mit dem Fluidreservoir und ausgangsseitig mit einem Auslass zur Ausgabe des Fluids verbunden ist, sowie eine Steuereinheit mit einem Steuerelement zur Ansteuerung des Motors, wobei das Koppelelement (94) zumindest während der Ausgabe des Fluids in Wirkverbindung mit zumindest einem Schraubengang (56) eines mittels des Motors (54) antreibbaren Schneckenrades (50) steht, wobei eine Drehung des Schneckenrades (50) eine axiale Verschiebung des Koppelelementes (58) und somit eine Betätigung der Pumpe (38) zur portionsweisen Ausgabe des Fluids bewirkt,
**dadurch gekennzeichnet,**
**dass** das Schneckenrad (50) einen einzigen Schraubengang (56) aufweist.

2. Fluidspender nach Anspruch 1,
**dadurch gekennzeichnet,**
**dass** der einzige Schraubengang (56) einen ersten Schraubengangabschnitt (86) mit einer positiven Steigung zur Kraftbeaufschlagung des Koppelelementes (58) aus einer Ausgangsstellung zur Ausgabe von Fluid aufweist.

3. Fluidspender nach zumindest Anspruch 2,
**dadurch gekennzeichnet,**
**dass** der erste Schraubengangabschnitt (86) mit positiver Steigung stetig in einen zweiten Schraubengangabschnitt (88) mit negativer Steigung übergeht, gegen den das Koppelelement (58) bei Rückführung der Pumpe (38) bzw. deren die Abgabe des Fluids ermöglichenden Elementes in ihre Ausgangsstellung anliegt.

4. Fluidspender nach zumindest Anspruch 3,
**dadurch gekennzeichnet,**
**dass** der erste Schraubengangabschnitt (86) mit positiver Steigung unstetig in eine Kante übergeht, wodurch das Koppelelement (58) bei Rückführung der Pumpe (38) bzw. deren das Fördern des Fluids ermöglichenden Elementes nicht in Wirkverbindung mit dem Schraubengang (56) steht.

5. Fluidspender nach zumindest einem der vorhergehenden Ansprüche,
**dadurch gekennzeichnet,**
**dass** das Koppelelement (58) als ein Schieber ausgebildet ist, der in axialer Richtung einer Längserstreckung eines Balgs oder Kolbens der Pumpe (38) verschiebbar angeordnet ist, wobei vorzugsweise von dem Schieber (58) ein Element, wie Stift (62), ausgeht, das kämmend mit dem zumindest einen Schraubengang (56) des Schneckenrads (50) zusammenwirkt.

6. Fluidspender nach Anspruch 5,
**dadurch gekennzeichnet,**
**dass** auf dem Element, wie Stift (62), ein Lager (44) wie Rollenkugellager angeordnet ist, welches gegen den Schraubengang (56) des Schneckenrads (50) anliegt und auf diesem abrollt.

7. Fluidspender nach zumindest einem der vorhergehenden Ansprüche,
**dadurch gekennzeichnet,**
**dass** das Koppelelement (58) mit einem Balg oder einem Kolben der Pumpe (38) gekoppelt ist und/oder dass das Koppelelement (58), der Balg und/oder der Kolben der Pumpe (38) federvorgespannt ist.

8. Fluidspender nach zumindest einem der vorhergehenden Ansprüche,
**dadurch gekennzeichnet,**
**dass** der Fluidspender (10) eine Einrichtung (90, 92) zur Detektion einer Annäherung des Koppelelementes (58) in seine Ausgangsstellung und/oder Ansteuerung des Motors (54) aufweist.

9. Fluidspender nach zumindest Anspruch 8,
**dadurch gekennzeichnet,**
**dass** die Einrichtung einen Geber (90), wie z. B. einen Magnet, an dem Koppelelement (58), und einen Sensor (92), wie z. B. ein Magnetsensor, an einer Gehäusewandung (94) aufweist oder umgekehrt.

## Claims

1. A fluid dispenser (10), in particular a soap dispenser, comprising a fluid reservoir (22), a pump (38), which is coupled to an electric motor (108) by means of a coupling element (94) and can be actuated to dispense fluid in portions, wherein the pump is connected on the input side to the fluid reservoir and on the output side to an outlet for dispensing the fluid, and a control unit having a control element for actuating the motor, wherein the coupling element (94) is operatively connected, at least during the dispensing of the fluid, to at least one screw thread (56) of a worm wheel (50), which can be driven by means of the motor (54), wherein rotation of the worm wheel (50) causes axial movement of the coupling element (58) and thus activation of the pump (38) for dispensing the fluid in portions,
**characterised in that**
the worm wheel (50) comprises a single screw thread (56).

2. The fluid dispenser according to claim 1,
**characterised in that**
the single screw thread (56) comprises a first screw-thread portion (86) having a positive pitch for applying force to the coupling element (58) from a starting position for dispensing fluid.

3. The fluid dispenser according to at least claim 2,
**characterised in that**
the first screw-thread portion (86) having a positive pitch continually transitions into a second screw-thread portion (88) having a negative pitch, which the coupling element (58) abuts when returning the pump (38) or its element enabling fluid dispensing to its starting position.

4. The fluid dispenser according to at least claim 3,
**characterised in that**
the first screw-thread portion (86) having a positive pitch non-continually transitions into an edge, as a result of which the coupling element (58) is not operatively connected to the screw thread (56) when returning the pump (38) or its element enabling fluid conveying.

5. The fluid dispenser according to at least one of the preceding claims,
**characterised in that**
the coupling element (58) is designed as a slider, which is arranged so as to be movable in the axial direction of a longitudinal extension of a bellows or piston of the pump (38), wherein an element, such as a pin (62), preferably protrudes from the slider (58) and interacts with the at least one screw thread (56) of the worm wheel (50) in a meshing manner.

6. The fluid dispenser according to claim 5,
**characterised in that**
a bearing (44), such as a roller bearing, is arranged on the element, such as a pin (62), which roller bearing abuts the screw thread (56) of the worm wheel (50) and rolls thereon.

7. The fluid dispenser according to at least one of the preceding claims,
**characterised in that**
the coupling element (58) is coupled to a bellows or a piston of the pump (38) and/or **in that** the coupling element (58), the bellows and/or the piston of the pump (38) is springloaded.

8. The fluid dispenser according to at least one of the preceding claims,
**characterised in that**
the fluid dispenser (10) comprises an apparatus (90, 92) for detecting the coupling element (58) approaching its starting position and/or actuation of the motor (54).

9. The fluid dispenser according to at least claim 8,
**characterised in that**
the apparatus comprises a transmitter (90), such as a magnet, on the coupling element (58), and a sensor (92), such as a magnet sensor, on a housing wall (94), or vice versa.

## Revendications

1. Distributeur de fluide (10), en particulier distributeur de savon, comprenant un réservoir de fluide (22), une pompe (38) couplée à un moteur électrique (108) via un élément de couplage (94) et pouvant être commandée pour distribuer du fluide par dose, sachant que la pompe est raccordée côté entrée au réservoir de fluide et côté sortie à une ouverture permettant de distribuer le fluide, ainsi qu'une unité de commande avec un élément de commande pour commander le moteur, sachant que l'élément de couplage (94), au moins pendant la distribution du fluide, est en liaison active avec au moins un pas de vis (56) d'une roue à vis (50) pouvant être entraînée au moyen du moteur (54), sachant qu'une rotation de la roue à vis (50) génère un déplacement axial de l'élément de couplage (58) et par conséquent un actionnement de la pompe (38) pour une distribution du fluide par dose,
**caractérisé en ce**
**que** la roue à vis (50) présente un pas de vis unique (56).

2. Distributeur de fluide selon la revendication 1,
**caractérisé en ce**
**que** l'unique pas de vis (56) présente une première section de pas de vis (86) avec un pas positif pour appliquer une force à l'élément de couplage (58) à partir d'une position initiale pour distribuer le fluide.

3. Distributeur de fluide selon au moins la revendication 2,
**caractérisé en ce**
**que** la première section de pas de vis (86) avec le pas positif se transforme en continu en une deuxième section de pas de vis (88) avec un pas négatif, contre laquelle l'élément de couplage (58) s'applique dans sa position initiale lors du retour de la pompe (38) ou de son élément permettant la distribution du fluide.

4. Distributeur de fluide selon au moins la revendication 3,
**caractérisé en ce**
**que** la première section de pas de vis (86) avec le pas positif se transforme de manière discontinue en une arête, de sorte que l'élément de couplage (58) n'est pas en liaison active avec le pas de vis (56) lors du retour de la pompe (38) ou de son élément permettant le refoulement du fluide.

5. Distributeur de fluide selon au moins l'une des revendications précédentes,
**caractérisé en ce**
**que** l'élément de couplage (58) est conçu sous la forme d'un poussoir qui est disposé de manière à pouvoir se déplacer dans la direction axiale d'une extension longitudinale d'un soufflet ou d'un piston de la pompe (38), sachant que de préférence un élément, tel qu'une broche (62), part du poussoir (58), ledit élément interagissant par engrènement avec au moins un pas de vis (56) de la roue à vis (50).

6. Distributeur de fluide selon la revendication 5,
**caractérisé en ce**
**qu'**un palier (44), tel qu'un roulement à billes, est disposé sur l'élément, tel qu'une broche (62), qui s'applique contre le pas de vis (56) de la roue à vis (50) et roule sur celui-ci.

7. Distributeur de fluide selon au moins l'une des revendications précédentes,
**caractérisé en ce**
**que** l'élément de couplage (58) est couplé à un soufflet ou un piston de la pompe (38) et/ou que l'élément de couplage (58), le soufflet et/ou le piston de la pompe (38) sont soumis à une précontrainte par ressort.

8. Distributeur de fluide selon au moins l'une des revendications précédentes,
**caractérisé en ce**
**que** le distributeur de fluide (10) présente un dispositif (90, 92) de détection d'un rapprochement de l'élément de couplage (58) dans sa position initiale et/ou de commande du moteur (54).

9. Distributeur de fluide selon au moins la revendication 8,
**caractérisé en ce**
**que** le dispositif présente un transmetteur (90), tel qu'un aimant, sur l'élément de couplage (58), et un capteur (92), tel qu'un capteur magnétique, sur une paroi du boîtier (94) ou inversement.
